# EUROPEAN PATENT APPLICATION

(11) **EP 1 731 040 A2**
(43) Date of publication of application: **13.12.2006**
(21) Application number: 06011669.6
(22) Date of filing: 06.06.2006
(51) Int. Cl.: A23G 9/48, A23G 9/42, A23G 9/22

(54) **Arrangement and method for the mix of particulate filling into consumer ice mass**

(30) Priority: 08.06.2005 DK 200500837
(71) Applicant: Tetra Laval Holdings & Finance S.A., 1009 Pully (CH)
(72) Inventor: Bohn, Robert, 60067 Illinois (US); Lundkvist, Flemming, 8462 Harlev J (DK)
(74) Representative: Schmidt, Jens Joergen

(57) **Abstract**

The invention relates to an arrangement for the mixing of particulate filling such as pieces of nougat or fruit into a consumer ice mass. The arrangement includes a housing with at least one supply opening for said consumer ice mass and at least one inlet to a cavity in the housing for said filling material, and a outlet opening The arrangement also has a rotor with one or more rotor blades for the mixing-in of said consumer ice mass and filling material by rotation, where the rotor blades create a number of cells in said cavity, and where they are provided with one or more through-going openings.

## Description

### Scope of the invention

The present invention relates to an arrangement and a method for the mixing of particulate filling such as pieces of nougat or fruit into consumer ice mass according to the preamble of claim 1.

### Prior art

It is desirable that such a mixing-in is carried out "in-line", i.e. with the addition of the filling to a flow of already air-puffed-up ice mass which is conveyed under pressure, e.g. from a through-flow freezer or cooler, and it is naturally necessary that the filling shall be distributed in the ice mass in a more or less uniform manner.

In the solving of this task, with the invention use is made of an apparatus unit of the vane-pump type, i.e. with a cylindrical pump housing and in that an eccentrically bearing supported rotor cylinder with a number of diametrically through-going lamella blades which are freely displaceable in their longitudinal direction. Near an outlet opening of the pump housing, the rotor cylinder itself tightens more or less effectively against the inner side of the pump housing so that the rotor blades here will be pressed completely into the rotor, while they on the opposite side of this will be pushed out to a maximum for continued tightening against the inner side of the pump housing near the inlet side of this housing. During the rotation of the rotor, the rotor blades will be pushed forwards and backwards by their interaction with the inner side of the pump housing during maintenance of the sealing against this.

With the use of such a unit, it is possible to arrange a supply of filling from above, that is by the feeding of the filling material to an empty upper cell chamber just before this is rotated downwards for the receipt of the ice mass at the input side of the unit. When this connection is opened by the rotation of the rotor, the ice mass flowing in will swirl up into and be mixed with the filling particles, and soon thereafter the rearmost rotor blade in the direction of rotation will close for further flow into the more or less filled cell, which is then transported over to the outlet side of the pump.

However, there hereby arises the problem that a distinct amount of air is fed together with the filling material to the relevant inlet cells, this air being encapsulated in the cells at the closing of these, whereby this air on the outlet side can form uncontrolled air pockets in the outgoing flow of material. This is extremely unfortunate for the further course, e.g. in connection with a subsequent dosing to freezing moulds or extrusion for the formation of ice items with fixed length and expected fixed weight or "fillness".

A feeding of the filling material under vacuum could be considered, but solutions of this type will generally be all too expensive regarding both plant and operation costs, among other things because no requirements are made otherwise regarding extreme sealing in the unit.

### Brief description of the invention

With the invention, one or more of said rotor blades are provided with one or more through-going openings to create connection between the cells.

The invention overcomes the above-mentioned problem in a much simpler manner, by configuring the lamella blades with through-going openings e.g. at the root parts thereof, which are exposed when these blades are at their longest extended position from the rotor.

In aspects of the invention, the cavity is a bore and the centre of said rotor is displaced in relation to the centre of the bore, and preferably the centre of said rotor is displaced horizontally in relation to said least one inlet.

By the aspects it will be achieved that the longest extending position of the rotor blades will be assumed just before or in connection with the relevant blade parts being moved down past the inlet opening in the stator housing, and if or when an overpressure is built up in the cell in question as a result of the flow of ice mass, the surplus air will thus in a simple manner merely escape upwards through these through-going openings, i.e. to the already air-filled supply space for the filling material. The relatively considerable amount of surplus air will hereby automatically be removed even before the receiving cell is closed for further feeding to the outlet opening, and it is thereby possible to avoid the said formation of air pockets in a particularly simple mechanical manner.

In a second aspect of the invention, said rotor have channels so that said rotor blades and one or more through-going openings are being moved in or out of the rotor by rotation of the rotor. The lamella blades will herewith be configured in such a manner that their through-going openings at the root will be closed as soon as they begin to be pushed back in towards the rotor after their passage of the inlet opening, so that thereafter they will not continue to be exposed during the further rotation over to the outlet opening. This means that during this rotation, significant amounts of ice mass can not be pressed back to the respective subsequent cells, and that work thus can be done with the efficiency of the mixing-in pump.

In a third aspect of the invention, said one or more through-going openings are recesses or holes in the rotor blades. It is hereby possible to select sets of rotor blades which are optimized for the size and the structure of a given filling material.

In a further aspect of the invention, the rotor blades consist of two plates mutually displaced 90 degrees, or three plates mutually displaced 60 degrees.

In another aspect of the invention, the two or three rotor blades have notches in the right or left side or in both sides, such as rectangular notches with a length 1 substantially corresponding to the movement of the rotor blades in the longitudinal direction.

In another aspect of the invention, at the notches the rotor blades have connection pieces with breadths which together substantially correspond to the full breadth of a rotor blade.

In another aspect of the invention, said one or more through-going openings are placed at or in the vicinity of the transverse edges of the notch or at the outermost transverse edges of the rotor blades.

The invention also relates to a method for the mixing of particulate filling material such as pieces of nougat or fruit into a consumer ice product mass by an arrangement according to the invention as disclosed herein.

### The drawings

In the following, the invention will be explained in more detail with reference to the drawing, where
Fig. 1 shows a perspective view of an arrangement for the mixing of particulate filling such as pieces of nougat or fruit into a consumer ice mass according to the invention,
Fig. 2 schematically shows a longitudinal section through the middle part of the arrangement from fig. 1,
Fig. 3a shows examples of a set of rotor blades for the arrangement's rotor according to the invention.
Fig. 3b schematically shows a set of rotor blades from fig. 3a put together in the arrangement's rotor, and
Fig. 4a and 4b show two alternative example embodiments of rotor blades.

### Detailed description of the invention

The arrangement 1 shown in fig. for the mixing of particulate filling such as pieces of nougat or fruit into a consumer ice mass consists of a stator housing 2 with a cylindrical bore 3, in which there is placed an eccentrically bearing supported rotor cylinder 4 which has diametrical through-going rotor blades 5-7. These plates are displaceable in their longitudinal direction in a well-known manner, so that during rotation of the rotor 4 they will seal more or less effectively against the stator ring/the cylindrical bore 3, hereby forming cells 8-13 between successive rotor blades 5-7. In the left-hand side of the stator housing there is arranged a supply opening 14 for ice mass 18. In the top of the stator housing there is an inlet opening 16 for the introduction from above of loose filling material 19 mixed with air, and in the right-hand side of the stator housing there is provided an outlet opening 15 for ice mass with mixed-in filling material 20.

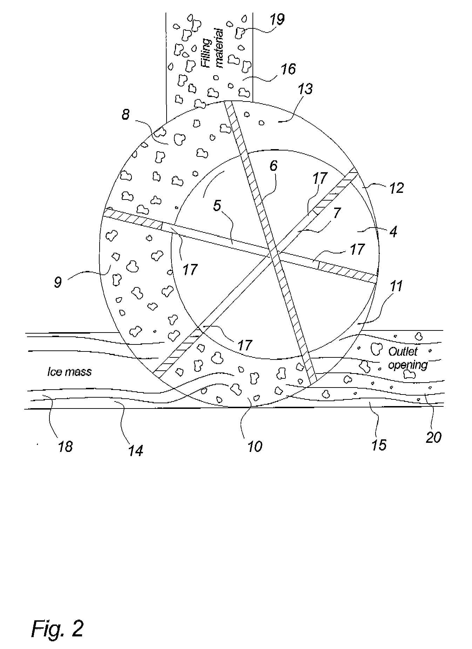

In fig. 2 the said cells between the rotor blades 5-7 are designated 8-13, and the cycle of operations in the arrangement can briefly be described as follows:

During the forward rotation of the cell 8 past the inlet opening 16, this cell will be more or less filled with filling material. The cells 9 and 10 are under forwards turning past the supply opening 14 for ice mass, i.e. they both receive in-flowing ice mass. Concurrently the cell 10 is in the process of opening towards the outlet opening 15, and the cell 11 has already emptied the most of its content to the outlet opening.

The filling material which falls down into the cell 9 will be pushed slightly upwards by the in-flowing ice mass, and will be mixed into this mass only to a small degree. When this cell is turned down towards the position of the cell 10, the lamella blade 5 rearmost in the direction of rotation will force the filling material down into the ice mass, and with suitable dimensioning and operational conditions it can hereby be achieved that the filling material is mixed into the ice mass with the necessary uniformity.

However, a remaining problem will be that the content of air in the cell 9 will also be pressed into the ice mass in the formation of air pockets therein at each of said passages of the lamella blades 5-7. Such a pressing-in will for good reasons be connected with an increase in pressure in the cell's content of air, so that this can make it necessary for air to be evacuated from the cell, e.g. through a fine-meshed wall section of the stator housing. However, for various reasons this is not a particular attractive solution.

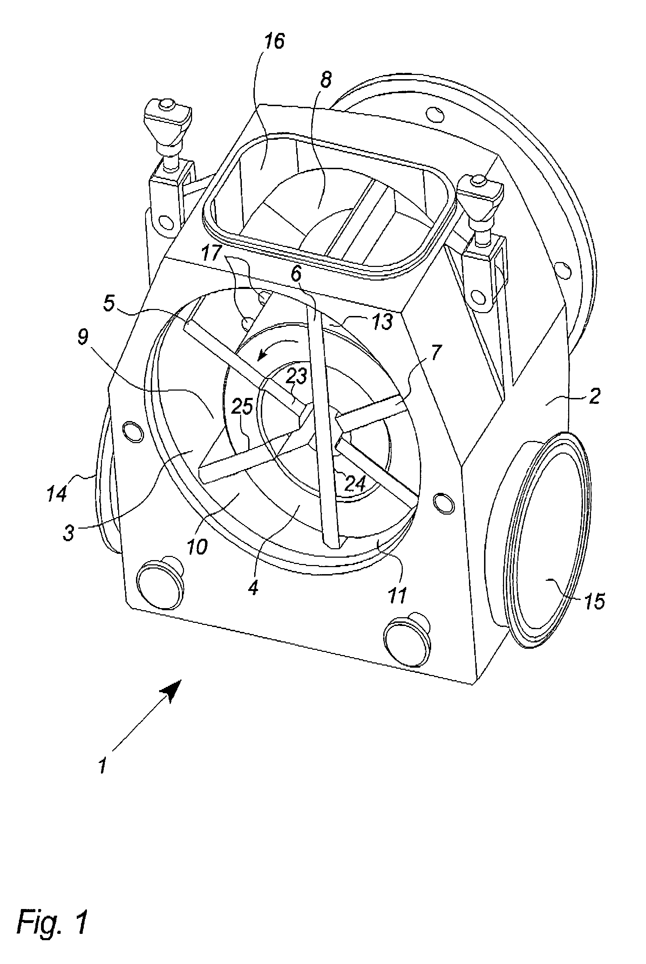

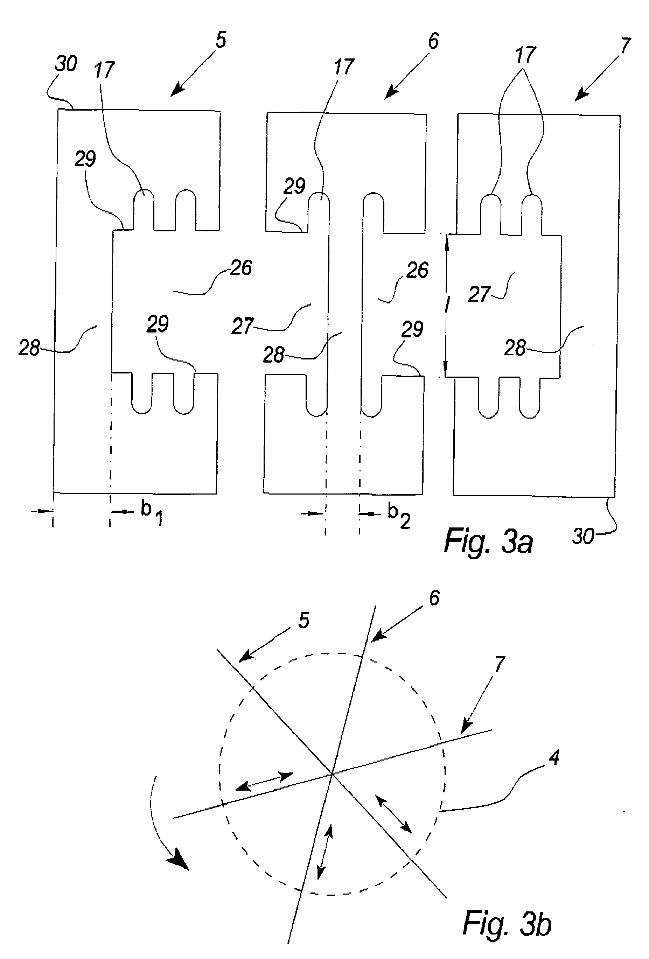

With the invention it has proved to be possible and otherwise attractive to arrange the rotor blades as controlled airing valves, that is by configuring these plates as shown in fig. 3a, i.e. with recesses 17 extending outwards from within, which is also indicated in figs. 1 and 2, where the outside-lying solid parts of these plates are shown with hatching lines.

From here it will be seen that in their displaced position between the cell areas 8 and 9, the rotor blades 5-7 will project so far outwards that the outer end of the recesses 17 will come to appear as holes lying outside the surface of the rotor 4, so that the above-mentioned surplus air from the cell 9 can be pressed unhindered up through these holes 17 to the upper, already air-filled space 8 at the inlet opening 16 for the filling material. Therefore, it will only be an acceptable minimum of air which is transferred further to the cell 10 and herewith to the departing product. The concemed holes 17 will be effectively closed during the subsequent course of rotation, so that they do not give rise to other possible undesired effects in other phases of the rotation.

The rotor blades 5-7 are also shown with rectangular notches 26, 27, where the notches either start from the left side 5, from the right side 7 or from both sides. With the notches, connection pieces 28 are formed between the one and the other part of a rotor blade, where the parts are the alternately projecting parts of the rotor.

At the same time, the notches allow the three rotor blades 5-7 to engage mutually and move in relation to one another in the rotor. Where the inwardly-facing transverse surfaces 29 of the notches 26, 27 can limit these movements for the individual rotor blade. This is shown schematically in fig. 3b, where the three rotor blades from fig. 3a are set together in the arrangement's rotor 4. The figure shows that six cells are formed with the rotor blades, where the rotor blades mutually form angles corresponding to 60 degrees.

In an alternative embodiment, the three rotor blades can be replaced with two rotor blades, where the two rotor blades mutually form angles corresponding to 90 degrees.

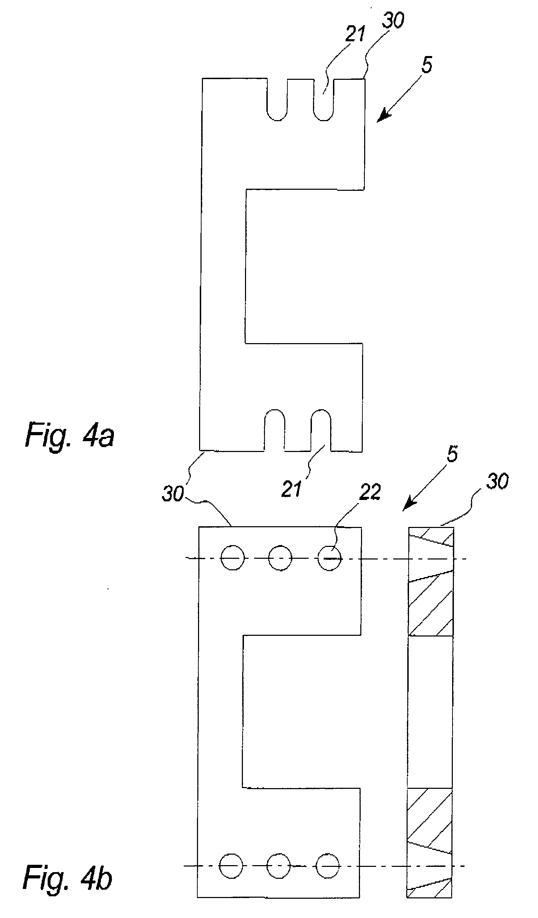

Fig. 4a shows an alternative embodiment for the rotor blades, where a rotor blade is shown with two sets of two recesses 21 which extend from the outer transverse surfaces 30 of the rotor blade.

The recesses 17 will herewith serve their purpose solely by their outer ends forming a hole connection between adjacent cells, and for that matter it can be sufficient that the outer end areas of these recesses function purely as break-through holes without necessarily being connected with any further inwardly extending recess, i.e. these openings can be configured as "pure holes" in the rotor blades. This appears more clearly of figure 4b, where the rotor blade 5 is shown from the front and from the side with two sets of three through-going holes 22 placed at the outermost transverse edges 30 of the rotor blade 5.

### List

- 1.: Arrangement for the mixing-in of particulate filling
- 2.: Stator housing
- 3.: Stator ring as a cylindrical bore in the stator housing
- 4.: Eccentrically housed rotor cylinder
- 5.: First rotor blade of the rotor
- 6.: Subsequent rotor blade of the rotor
- 7.: Last rotor blade of the rotor
- 8.: First cell between successive rotor blades in direction of rotation (primary inlet cell)
- 9.: Cell between successive rotor blades
- 10.: Cell between successive rotor blades (primary mixing-in cell)
- 11.: Cell between successive rotor blades
- 12.: Cell between successive rotor blades
- 13.: Cell between successive rotor blades
- 14.: Supply opening for consumer ice mass
- 15.: Outlet opening
- 16.: Inlet for filling material
- 17.: Recesses
- 18.: Ice mass
- 19.: Filling material
- 20.: Ice mass with mixed-in filling material
- 21.: Upper recesses
- 22.: Through-going holes
- 23.: Channel in rotor for first rotor blade
- 24.: Channel in rotor for subsequent rotor blade
- 25.: Channel in rotor for last rotor blade
- 26.: Right-hand or left-hand notch in rotor blade
- 27.: Right-hand or left-hand notch in rotor blade
- 28.: Connection piece in rotor blade
- 29.: Transverse edges of the notches
- 30.: Outermost transverse edges of the rotor blades.

## Claims

1. Arrangement (1) for the mixing of particulate filling material (19) such as pieces of nougat or fruit into a consumer ice mass (18), where said arrangement comprises:
a housing (2) with at least one supply opening (14) for said consumer ice mass and at least one inlet opening (15) for said filling material to a cavity (3) in the housing and a outlet opening (15),
a rotor (4) with one or more rotor blades (5-7) for the mixing-in of said consumer ice mass and filling material by rotation, where the rotor blades create a number of cells (8-13) in said cavity by being pressed against the surface of the cavity,
**characterised in that**
one or more of said rotor blades (5-7) are provided with one or more through-going openings (17, 21, 22) for the creation of connection between the cells.

2. Arrangement (1) for the mixing-in of particulate filling according to claim 1, **characterised in that** said cavity (3) is a bore and that the centre for said rotor (4) is displaced in relation to the centre of the bore.

3. Arrangement (1) for the mixing-in of particulate filling according to claim 2, **characterised in that** the centre for said rotor (4) is displaced horizontally in relation to said least one inlet (16).

4. Arrangement (1) for the mixing-in of particulate filling according to claim 2 or 3, **characterised in that** said rotor has channels (23-25) so that said rotor blades (5-7) and one or more through-going openings (17) are moved in or out of the rotor (4) by rotation of the rotor.

5. Arrangement (1) for the mixing-in of particulate filling according to one or more of the claims 1 to 4, **characterised in that** said one or more through-going openings (17, 21, 22) are recesses (17, 21) or holes (22) in the rotor blades (5-7).

6. Arrangement (1) for the mixing-in of particulate filling according to one or more of the claims 1 to 5, **characterised in that** the rotor blades (5-7) consist of two plates mutually displaced 90 degrees or three plates mutually displaced 60 degrees.

7. Arrangement (1) for the mixing-in of particulate filling according to claim 6, **characterised in that** the two or three rotor blades (5-7) have notches in the right (26) or the left side (27) or in both sides (26, 27).

8. Arrangement (1) for the mixing-in of particulate filling according to claim 7, **characterised in that** the notches (26, 27) are rectangular with a length (1) corresponding substantially to the movement of the rotor blades in the longitudinal direction.

9. Arrangement (1) for the mixing-in of particulate filling according to claim 8, **characterised in that** the rotor blades (5-7) at the notches (26, 27) have connection pieces (28) with breadths (b₁, b₂) which together correspond substantially to the full breadth of a rotor blade.

10. Arrangement (1) for the mixing-in of particulate filling according to one or more of the claims 7 to 9, **characterised in that** said one or more through-going openings (17, 21, 22) are placed at or in the vicinity of the transverse edges (29) of the notch or the outermost transverse edges (30) of the rotor blades (5-7).

11. Method for the mixing of particulate filling material such as pieces of nougat or fruit into a consumer ice mass by an arrangement according to one or more of the claims 1 to 10.
